# EUROPÄISCHE PATENTANMELDUNG

(11) **EP 4 311 737 A1**
(43) Veröffentlichungstag der Anmeldung: **31.01.2024**
(21) Anmeldenummer: 23186907.4
(22) Anmeldetag: 21.07.2023
(51) Int. Cl.: B61L 15/00, B61L 25/02, B61L 27/57, H04W 4/021, H04W 4/42, H04L 67/75

(54) **VERFAHREN UND SYSTEM ZUM ÜBERTRAGEN VON DATEN WÄHREND DER FAHRT EINES SPURGEBUNDENEN FAHRZEUGS**

(30) Priorität: 29.07.2022 DE 102022207881
(71) Anmelder: Siemens Mobility GmbH, 81739 München (DE)
(72) Erfinder: Braun, Thorsten, 91088 Bubenreuth (DE); Stummer, Tobias, 91207 Lauf a.d. Pegnitz (DE)
(74) Vertreter: Siemens Patent Attorneys

(57) **Zusammenfassung**

Die Erfindung betrifft ein Verfahren und System (1) zum Übertragen von Daten zwischen einem spurgebundenen Fahrzeug (3) und einer landseitigen Einrichtung (5) während einer Fahrt (D) des spurgebundenen Fahrzeugs (3). Zur Verbesserung des Betriebs des spurgebundenen Fahrzeugs (3) werden bei dem Verfahren während der Fahrt (D) des spurgebundenen Fahrzeugs (3) Daten zwischen dem spurgebundenen Fahrzeug (3) und der landseitigen Einrichtung (5) übertragen (E). Eine Ortsinformation, welche einen aktuellen Ort des spurgebundenen Fahrzeugs (3) während der Fahrt (D) repräsentiert, wird ermittelt (F1). Eine Verfügbarkeitsinformation, welche eine Verfügbarkeit der Datenübertragung repräsentiert, wird für einen im Fahrtverlauf vorausliegenden Fahrtabschnitt (46, 47) mittels einer landseitigen Prognoseeinrichtung (37) anhand der Ortsinformation prognostiziert (G). Vor dem Erreichen des Fahrtabschnitts (46, 47) wird eine Hinweisinformation, welche einen Hinweis zur Prognose angibt, anhand der prognostizierten Verfügbarkeitsinformation mittels einer Ausgabeeinrichtung bereitgestellt (H).

## Beschreibung

Die Erfindung betrifft ein Verfahren und System zum Übertragen von Daten zwischen einem spurgebundenen Fahrzeug und einer landseitigen Einrichtung während einer Fahrt des spurgebundenen Fahrzeugs.

Grundsätzlich ist es bekannt, Daten zwischen Fahrzeugen und der Landseite während der Fahrt des Fahrzeugs zu übertragen.

DE 10 2016 221 986 A1 beschreibt ein Verfahren, Computerprogramm und eine Vorrichtung für ein Mobilgerät zum Anpassen einer Kommunikation über ein mobiles Kommunikationssystem. Bei dem Verfahren wird eine bevorstehende Kommunikationseinschränkung einer Kommunikation über ein mobiles Kommunikationssystem basierend auf einer voraussichtlichen Position des Mobilgeräts auf einer mehrfach durch das Mobilgerät zurückgelegten Strecke bestimmt. Ferner wird ein voraussichtliches zeitliches Ausmaß der bevorstehenden Kommunikationseinschränkung berechnet. Die Kommunikationseinschränkung ergibt sich beispielsweise durch Abschattung durch Tunnel oder weitere Hindernisse oder Signaldämpfung. Ein Nutzer des Mobilgeräts kann gewarnt werden, dass eine Kommunikationseinschränkung imminent ist, etwa um ein Telefongespräch zu verschieben, nach der Kommunikationseinschränkung automatisch wieder aufzunehmen, oder um Wegalternativen aufzuzeigen, bei denen die Kommunikationseinschränkung verzögert, verringert oder vermieden werden kann.

DE 10 2017 205 479 A1 beschreibt ein Verfahren zur Vorhersage einer Mobilfunksignalstärke eines Kraftfahrzeugs für eine Fahrt auf einer geplanten Route. Dabei wird die Mobilfunkanbindung optimiert, falls die Vorhersage eine Mobilfunksignalstärke, die kleiner als ein vorbestimmter Grenzwert ist, ergibt. Aus zumindest einem Erfassungsfahrzeug werden jeweils die Mobilfunksignalstärke als Mobilfunksignalstärkedaten und eine zum Erfassungszeitpunkt vorliegende Wetterlage als Wetterlagedaten erfasst. Die Mobilfunksignalstärkedaten und die Wetterlagedaten werden kombiniert mit einer beim Erfassungszeitpunkt vom Erfassungsfahrzeug eingenommenen Geoposition gespeichert. Zum Vorhersagen der Mobilfunksignalstärke des Kraftfahrzeugs in Abhängigkeit einer Wetterlage werden Mobilfunksignalstärkedaten ausgewählt, die mit Wetterlagedaten kombiniert gespeichert sind, welche bei einem Vergleich mit der Wetterlage ein vorbestimmtes Vergleichskriterium erfüllen, wobei die gespeicherte Geoposition innerhalb eines vorbestimmten Abstands der geplanten Route liegt.

WO 2020/249365 A1 beschreibt ein Verfahren zum Aufbau einer drahtlosen Datenverbindung zwischen einem Fahrzeug und einer externen Einheit. Bei dem Verfahren wird unter Verwendung einer Streckenkarte, die zumindest eine Verfügbarkeit einer drahtlosen Datenverbindung über ein Übertragungsnetz ortsabhängig angibt, und unter Verwendung von fahrtabhängigen Fahrzeuginformationen eine Prognose zumindest über eine zu erwartende Verfügbarkeit der drahtlosen Datenverbindung erstellt. In Abhängigkeit von dem Ergebnis der Prognose wird die drahtlose Datenverbindung zur Datenübertragung über das Übertragungsnetz aufgebaut.

Vor diesem Hintergrund ist es Aufgabe der Erfindung, den Betrieb eines spurgebundenen Fahrzeugs zu verbessern und insbesondere die Handhabbarkeit des Betriebs zu vereinfachen.

Diese Aufgabe wird durch die erfindungsgemäßen Lösungen gemäß den unabhängigen Ansprüchen gelöst.

Bei dem erfindungsgemäßen Verfahren werden während der Fahrt des spurgebundenen Fahrzeugs Daten zwischen dem spurgebundenen Fahrzeug und der landseitigen Einrichtung übertragen. Eine Ortsinformation, welche einen aktuellen Ort des spurgebundenen Fahrzeugs während der Fahrt repräsentiert, wird ermittelt. Eine Verfügbarkeitsinformation, welche eine Verfügbarkeit der Datenübertragung repräsentiert, wird für einen im Fahrtverlauf vorausliegenden Fahrtabschnitt mittels einer landseitigen Prognoseeinrichtung anhand der Ortsinformation prognostiziert. Vor dem Erreichen des Fahrtabschnitts wird eine Hinweisinformation, welche einen Hinweis zur Prognose angibt, anhand der prognostizierten Verfügbarkeitsinformation mittels einer Ausgabeeinrichtung bereitgestellt.

Mit der Erfindung wurde erkannt, dass die schwankende Verfügbarkeit (z.B. Übertragungsqualität) eine Herausforderung für die Bereitstellung von Inhalten über die Verbindung zwischen Fahrzeug und der Landseite (Zug-Land-Kommunikationstrecke) darstellt. Dies stellt insbesondere aus dem Grund ein Problem dar, da unterschiedliche Dienste diese Verbindung gemeinsam nutzen.

Insbesondere bei der Datenübertragung während der Fahrt, beispielsweise als Echtzeit-Übertragung bzw. Live-Übertragung von Videoinhalten, führt die schwankende Übertragungsqualität zu Vorbehalten und der Frage, ob eine Live-Übertragung bei heutigen Lösungen überhaupt sinnvoll erscheint. Ein Anwendungsfall für eine Übertragung der Videodaten in Echtzeit ist eine TV-Live-Übertragung auf eine Fahrgastinformationsanzeige, die innerhalb eines Fahrgastbereichs angeordnet ist.

Zudem basiert die Erfindung auf der Erkenntnis, dass wichtige und/oder zeitkritische Daten bei der Datenübertragung in der Regel priorisiert werden. Dies stellt eine weitere Herausforderung dar, wenn die während der Fahrt gewünschte Datenübertragung (beispielsweise von Videodaten) vornehmlich Daten geringer Kritikalität betrifft. Dann werden diese Daten gegenüber den Daten hoher Kritikalität bei der Datenübertragung zurückgestellt oder es wird ihnen lediglich eine verbleibende Restbandbreite zur Verfügung gestellt. Dies ist insbesondere dann nachteilig, wenn diese Daten im Rahmen des Live-Betriebs des Fahrzeugs von Interesse für den Betreiber sind.

Das erfindungsgemäße Verfahren behebt diese Probleme, indem die oben beschriebene Hinweisinformation bereitgestellt wird. Die Hinweisinformation gibt Hinweise zur Prognose an, welche die Verfügbarkeit bei der Datenübertragung für einen im Fahrverlauf vorausliegenden Fahrtabschnitt prognostiziert. Auf diese Weise ist es möglich, die Hinweisinformation bereits bereitzustellen, wenn das Fahrzeug den Fahrtabschnitt noch nicht erreicht hat. Mit anderen Worten: Bereits vor dem Erreichen des Fahrtabschnitts liegt eine Hinweisinformation vor, die beispielsweise einem Benutzer angibt, was in Bezug auf die Verfügbarkeit bei einem vorausliegenden Fahrtabschnitt zu erwarten ist. Der Benutzer kann sich demnach auf etwaige anstehende Änderungen bei der Verfügbarkeit einstellen.

Durch das erfindungsgemäße Verfahren wird eine Echtzeit-Übertragung von Daten handhabbarer gemacht, was die Akzeptanz für Echtzeit-Übertragungen erhöht. Denn durch die Hinweisinformation können auftretende Probleme bei der Verfügbarkeit bereits dann erkannt werden, wenn das Fahrzeug sich noch nicht in dem entsprechenden Fahrtabschnitt befindet. Dies eröffnet beispielsweise einem Benutzer der Ausgabeeinrichtung die Möglichkeit, proaktiv auf die Hinweisinformation zu reagieren. Dies kann beispielsweise durch die Anpassung des Nutzungsverhaltens geschehen, beispielsweise indem parallele Datenübertragungen rechtzeitig pausiert werden.

Die auf der Prognose basierende Hinweisinformation kann zudem eine Grundlage für die Planung von Datentransfer-Aufgaben sein, beispielsweise indem diese priorisiert und gesteuert werden. Beispielsweise wird eine Echtzeitübertragung von Videodaten zwischen dem spurgebundenen Fahrzeug und der Landseite lediglich dann initiiert, wenn die prognostizierte Verfügbarkeit ausreichend ist.

Bereits das Wissen über eine zu erwartende Verfügbarkeit hilft dem Benutzer: Denn dieser wird von etwaigen Änderungen bei der Verfügbarkeit nicht überrascht. Insofern wird der Benutzer (selbst bei einem Ausfall der Echtzeit-Übertragung) in der Regel nicht von einer Fehlfunktion des Systems ausgehen, da der Benutzer die Änderung der Verfügbarkeit als Grund für Änderung der Ausgabe der Daten, beispielsweise eine Verzögerung, eine Abnahme der Qualität, einen Ausfall, etc., bereits erwarten konnte.

Das spurgebundene Fahrzeug ist vorzugsweise ein Schienenfahrzeug, beispielsweise ein Triebzug, insbesondere ein Hochgeschwindigkeitszug.

Der Fachmann fasst unter die Formulierung "zwischen dem spurgebundenen Fahrzeug und einer landseitigen Einrichtung", dass Daten sowohl ausgehend von dem Fahrzeug an die landseitige Einrichtung als auch ausgehend von der landseitigen Einrichtung an das Fahrzeug übertragen werden können. Vorzugsweise betrifft das erfindungsgemäße Verfahren jedoch Anwendungsfälle, bei denen die Daten ausgehend von dem Fahrzeug an die landseitige Einrichtung übertragen werden.

Die Ortsinformation wird vorzugsweise auf Basis eines Ortungssignals ermittelt. Das Ortungssignal empfängt das spurgebundene Fahrzeug vorzugsweise mittels eines GPS-Empfängers (GPS: Global Positioning System). Weiter vorzugsweise basiert das Ortungssignal auf einem Zählsignal eines Achszählers des spurgebundenen Fahrzeugs.

Die landseitige Prognoseeinrichtung umfasst vorzugsweise eine Recheneinrichtung und eine Datenbank, die Teil einer landseitigen Servereinrichtung sein können.

Vorzugsweise umfasst die Hinweisinformation eine Angabe, die die Verfügbarkeit für den vorausliegenden Fahrtabschnitt ankündigt. Alternativ oder zusätzlich enthält die Hinweisinformation weiter vorzugsweise die Verfügbarkeitsinformation an sich. Demnach kann durch Bereitstellung der Verfügbarkeitsinformation bereits der Hinweis zur Prognose angegeben werden.

Die Ausgabeeinrichtung ist beispielsweise eine landseitige Ausgabeeinrichtung.

Gemäß einer weiteren bevorzugten Ausführungsform des erfindungsgemäßen Verfahrens wird eine Geschwindigkeitsinformation, welche eine aktuelle Geschwindigkeit des spurgebundenen Fahrzeugs während der Fahrt repräsentiert, ermittelt, wobei die Verfügbarkeitsinformation ferner anhand der Geschwindigkeitsinformation prognostiziert wird.

Auf Basis der Ortsinformation, der Geschwindigkeitsinformation und einer Richtungsinformation, welche eine aktuelle Fahrtrichtung des spurgebundenen Fahrzeugs repräsentiert, wird ein Bewegungsvektor ermittelt. Dieser kann beispielsweise genutzt werden, um als Hinweisinformation eine Zeit anzugeben, ab wann die prognostizierte Verfügbarkeit vorliegt, oder eine Zeitdifferenz ab dem aktuellen Zeitpunkt anzugeben, wie weit die prognostizierte Verfügbarkeit in der Zukunft liegt (z.B. "in x Sekunden wird die Verfügbarkeit ... sein") .

Gemäß einer bevorzugten Ausführungsform des erfindungsgemäßen Verfahrens wird die Verfügbarkeitsinformation anhand einer historischen Verfügbarkeitsinformation prognostiziert. Die historische Verfügbarkeitsinformation wird bei wenigstens einer vergangenen Fahrt des spurgebundenen Fahrzeugs und/oder eines weiteren spurgebundenen Fahrzeugs ermittelt.

Die vergangene Fahrt des spurgebundenen Fahrzeugs ist vorzugsweise eine vergangene Fahrt in einem Normal- oder Regelbetrieb.

Die vergangene Fahrt des weiteren Fahrzeugs ist beispielsweise eine Messfahrt eines Messfahrzeugs oder eines weiteren spurgebundenen Fahrzeugs, welches dieselbe Fahrtstrecke in einem Normal- oder Regelbetrieb befährt.

Das Messfahrzeug ist beispielsweise ein spurgebundenes Fahrzeug oder ein anderweitiges Land- oder Luftfahrzeug (z.B. eine Drohne), welches sich bei der Messfahrt entlang der Fahrstrecke bewegt.

Die historischen Verfügbarkeitsinformationen werden beispielsweise bei einer Mehrzahl von vergangenen Fahrten ermittelt. Dazu gehören die vergangenen Fahrten des spurgebundenen Fahrzeugs auf derselben Fahrtstrecke. Ferner gehören dazu die vergangenen Fahrten weiterer spurgebundener Fahrzeuge auf derselben Fahrtstrecke, die bei einem Normal- oder Regelbetrieb erfolgen. Ferner gehören dazu vergangenen Messfahrten eines Messfahrzeugs.

Bei einer Weiterbildung dieser bevorzugten Ausführungsform werden bei der wenigstens einen vergangenen Fahrt
- der aktuelle Ort des spurgebundenen Fahrzeugs oder des weiteren Fahrzeugs,
- eine Zeitinformation, welche die aktuelle Zeit repräsentiert,
- ein Verbindungstyp, welcher die Art der datentechnischen Verbindung zwischen dem spurgebundenen Fahrzeug und der landseitigen Einrichtung repräsentiert,
- eine Verbindungsqualität zwischen dem spurgebundenen Fahrzeug und der landseitigen Einrichtung und/oder
- eine Bandbreite für das Hochladen und Runterladen von Daten zwischen dem spurgebundenen Fahrzeug und der landseitigen Einrichtung
ermittelt.

Der Verbindungstyp umfasst beispielsweise eine 4G- oder 5G-Mobilfunkverbindung.

Die Verbindungsqualität wird beispielsweise durch das Signal-Zu-Rausch-Verhältnis und/oder die Signalstärke abgegeben.

Die Bandbreite wird beispielsweise in Bits pro Sekunde oder Bytes pro Sekunde angegeben.

Bei einer weiteren bevorzugten Weiterbildung wird die Verfügbarkeitsinformation ferner anhand von während der Fahrt vorliegenden Umgebungsinformationen, welche die Umgebung des spurgebundenen Fahrzeugs repräsentieren, prognostiziert.

Die Umgebungsinformationen umfasst vorzugsweise Wetterdaten, welche das aktuelle Wetter in der Umgebung repräsentieren.

Die Umgebungsinformationen umfassen weiter vorzugsweise Informationen in Bezug auf die Tageszeit und Veranstaltungen in der Umgebung des Fahrzeugs, die Einfluss auf den Belegungsgrad (durch Fahrgäste) des Fahrzeugs haben können. Dem liegt der Gedanke zugrunde, dass ein höherer Belegungsgrad in der Regel zu einer umfangreicheren Nutzung der Zug-Land-Kommunikationstrecke durch die Fahrgäste führt.

Nach einer weiteren bevorzugten Ausführungsform des erfindungsgemäßen Verfahrens repräsentiert die prognostizierte Verfügbarkeitsinformation eine Beschränkung der Datenübertragung. Dies stellt eine besonders zweckmäßige Ausführung des erfindungsgemäßen Verfahrens dar, da die Hinweismeldung besonders bei einer Beschränkung der Datenübertragung von Mehrwert beispielsweise für einen Benutzer ist.

Gemäß einer weiteren bevorzugten Ausführungsform des erfindungsgemäßen Verfahrens umfasst die Hinweisinformation eine Hintergrundinformation, welche einen Grund für die innerhalb des vorausliegenden Fahrtabschnitts prognostizierte Verfügbarkeit angibt. Die Hintergrundinformation wird auf Basis von einer digitalen Karte der Fahrtstrecke und/oder der Umgebungsinformation der vorstehend beschriebenen Art ermittelt.

Auf diese Weise ist die Ursache für die prognostizierte Verfügbarkeit innerhalb des vorausliegenden Fahrtabschnitts nachvollziehbar. Dies erhöht wiederum die Akzeptanz bei einem Benutzer der Ausgabeeinrichtung.

Die digitale Karte der Fahrtstrecke gibt beispielsweise Auskunft über entlang der Fahrtstrecke vorhandene Gebäude, Baumbestand, Gebirge, Haltestellen, Tunnel, etc. Die digitale Karte umfasst vorzugsweise eine Netzabdeckungskarte, welche bei den vergangenen Fahrten gewonnenen Informationen, wie Verbindungstyp, Verbindungsqualität und Bandbreite, enthält.

Bei einer weiteren bevorzugten Ausführungsform des erfindungsgemäßen Verfahrens wird eine Umgebung innerhalb oder außerhalb des spurgebundenen Fahrzeugs während der Fahrt des spurgebundenen Fahrzeugs mittels einer optischen Erfassungseinrichtung erfasst. Videodaten werden während der Fahrt des spurgebundenen Fahrzeugs auf Basis der Erfassung erzeugt. Das Übertragen der Daten während der Fahrt des spurgebundenen Fahrzeugs umfasst ein Übertragen der Videodaten. Die Videodaten werden während der Fahrt des spurgebundenen Fahrzeugs mittels der Ausgabeeinrichtung ausgegeben.

Die optische Erfassungseinrichtung umfasst vorzugsweise eine oder mehrere Kameraeinheiten.

Bei einer bevorzugten Weiterbildung werden die Videodaten als Datenstrom in Echtzeit ausgehend von der Erfassungseinrichtung bis zu der Ausgabeeinrichtung übertragen.

Die Übertragung der Videodaten in Echtzeit wird häufig auch als Live-Streaming bezeichnet. Die erfindungsgemäße Lösung ist besonders für die Anwendung bei der Übertragung in Echtzeit vorteilhaft, da die Akzeptanz für eine Übertragung dieser Art durch die Hinweisinformation erhöht wird.

Ein Beispiel für die Übertragung der Videodaten in Echtzeit ist eine Live-Übertragung der Videodaten ausgehend von der Erfassungseinrichtung zu einer Ausgabeeinrichtung, die innerhalb eines Fahrgastbereichs angeordnet und zur Ausgabe der Videodaten eingerichtet ist. Ein weiteres Beispiel ist die Live-Übertragung der Videodaten ausgehend von der Erfassungseinrichtung zu einer landseitigen Ausgabeeinrichtung, die zur Ausgabe der Videodaten eingerichtet ist.

Bei einer weiteren bevorzugten Ausführungsform des erfindungsgemäßen Verfahrens ist die Ausgabeeinrichtung eine landseitige, von einem Benutzer wahrnehmbare Ausgabeeinrichtung.

Die landseitige Ausgabeeinrichtung umfasst vorzugsweise eine Anzeigeeinrichtung und/oder eine Lautsprechereinrichtung, welche zur Ausgabe der vorstehend beschriebenen Videodaten eingerichtet sind.

Die Anzeigeeinrichtung ist beispielsweise Teil einer Web-Benutzerschnittstelle (UI: User Interface) eines Flottenmanagementsystems.

Der Benutzer gehört beispielsweise dem Personal des Betreibers des spurgebundenen Fahrzeugs an.

Ein weiteres Beispiel für die oben beschriebene Übertragung in Echtzeit ist die Live-Übertragung der Videodaten ausgehend von der Erfassungseinrichtung zu der landseitigen Ausgabeeinrichtung (die zur Ausgabe der Videodaten eingerichtet ist).

Die Erfindung betrifft ferner ein Computerprogramm, umfassend Befehle, die bei der Ausführung des Programms durch eine Recheneinrichtung diese veranlassen das Verfahren der vorstehend beschriebenen Art auszuführen. Die Erfindung betrifft ferner ein Computerprogrammprodukt mit einem Computerprogramm dieser Art. Die Recheneinrichtung ist vorzugsweise zumindest in Teilen eine Recheneinrichtung des spurgebundenen Fahrzeugs und/oder der landseitigen Einrichtung.

Die Erfindung betrifft ferner eine Bereitstellungsvorrichtung für das Computerprogramm der vorstehend beschriebenen Art, wobei die Bereitstellungsvorrichtung das Computerprogramm speichert und/oder bereitstellt. Die Bereitstellungsvorrichtung ist beispielsweise eine Speichereinheit, die das Computerprogramm speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogramms. Diese Bereitstellung kann beispielsweise aber auch als partieller Download erfolgen, der aus mehreren Teilen besteht. Ein solches Computerprogramm wird beispielsweise unter Verwendung der Bereitstellungsvorrichtung in ein System eingelesen, sodass das erfindungsgemäße Verfahren auf einem Computer zur Ausführung gebracht wird.

Das erfindungsgemäße System umfasst eine Kommunikationsverbindung, welche eingerichtet ist, während der Fahrt des spurgebundenen Fahrzeugs Daten zwischen dem spurgebundenen Fahrzeug und der landseitigen Einrichtung zu übertragen. Das System umfasst ferner eine Ortsermittlungseinrichtung, welche eingerichtet ist, eine Ortsinformation, welche einen aktuellen Ort des spurgebundenen Fahrzeugs während der Fahrt repräsentiert, zu ermitteln. Das System umfasst ferner eine landseitige Prognoseeinrichtung, welche eingerichtet ist, eine Verfügbarkeitsinformation, welche eine Verfügbarkeit der Datenübertragung repräsentiert, für einen im Fahrtverlauf vorausliegenden Fahrtabschnitt anhand der Ortsinformation zu prognostizieren. Das System umfasst ferner eine Ausgabeeinrichtung, welche eingerichtet ist, vor dem Erreichen des Fahrtabschnitts eine Hinweisinformation, welche einen Hinweis zur Prognose angibt, anhand der prognostizierten Verfügbarkeitsinformation bereitzustellen.

Zu Vorteilen, Ausführungsformen und Ausgestaltungsdetails des erfindungsgemäßen Computerprogramms, der erfindungsgemäßen Bereitstellungsvorrichtung und des erfindungsgemäßen Systems kann auf die vorstehende Beschreibung zu den entsprechenden Verfahrensmerkmalen des erfindungsgemäßen Verfahrens verwiesen werden.

Ausführungsbeispiele der Erfindung werden anhand der Zeichnungen erläutert. Es zeigen:
- Figur 1: schematisch den Aufbau eines Ausführungsbeispiels des erfindungsgemäßen Systems mit einem spurgebundenen Fahrzeug und einer landseitigen Einrichtung,
- Figur 2: schematisch den Ablauf eines Ausführungsbeispiels des erfindungsgemäßen Verfahrens und

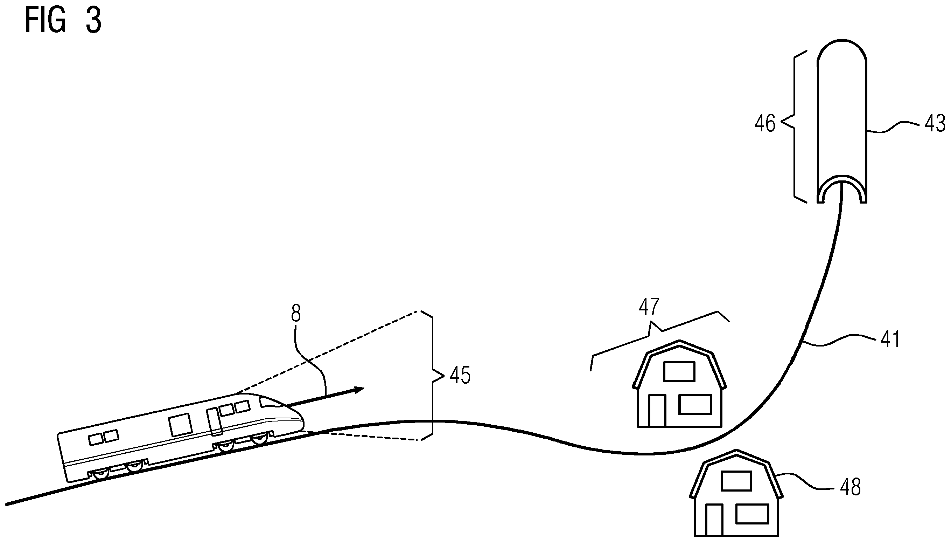

- Figur 3: eine schematische Ansicht einer Fahrstrecke, die von dem spurgebundenen Fahrzeug befahren wird.

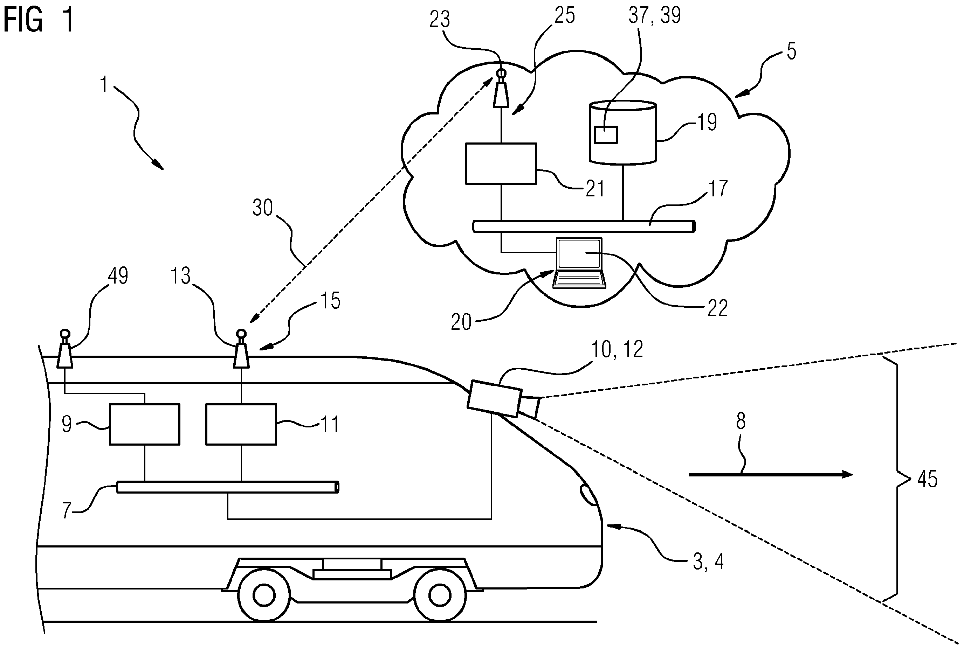

Figur 1 zeigt eine schematische Ansicht eines Systems 1 mit einem spurgebundenen Fahrzeug 3 und einer landseitigen Einrichtung 5.

Das spurgebundene Fahrzeug 3 ist ein Schienenfahrzeug 4, beispielsweise ein Hochgeschwindigkeitszug. Die landseitige Einrichtung 5 ist Teil einer Betriebsleitzentrale.

Das spurgebundene Fahrzeug 3 weist ein Kommunikationsnetz 7 auf, welches als Ethernet-Netz ausgebildet ist. An das Kommunikationsnetz 7 sind beispielsweise eine Ortsermittelungseinrichtung 9 und eine optische Erfassungseinrichtung 10 datentechnisch angeschlossen. Zudem ist ein Mobile-Communication-Gateway 11 an das Kommunikationsnetz 7 angeschlossen, welches mit einer drahtlosen Kommunikationsschnittstelle 13 verbunden ist. Das Mobile-Communication-Gateway 11 bildet zusammen mit der drahtlosen Kommunikationsschnittstelle 13 eine Kommunikationseinrichtung 15, welche ausgebildet ist, Daten an die landseitige Einrichtung 5 zu senden und Daten von der landseitigen Einrichtung 5 zu empfangen.

Die landseitige Einrichtung 5 weist ein Kommunikationsnetz 17 auf, welches als Ethernet-Netz ausgebildet ist. An das Kommunikationsnetz 17 ist beispielsweise eine Servereinrichtung 19 und eine Ausgabeeinrichtung 20 datentechnisch angeschlossen. Zudem ist ein Ground-Communication-Gateway 21 an das Kommunikationsnetz 17 angeschlossen, welches mit einer drahtlosen Kommunikationsschnittstelle 23 verbunden ist. Das Ground-Communication-Gateway 21 bildet zusammen mit der drahtlosen Kommunikationsschnittstelle 23 eine Kommunikationseinrichtung 25, welche ausgebildet ist, Daten an das spurgebundene Fahrzeug 3 zu senden und Daten von dem spurgebundenen Fahrzeug 3 zu empfangen.

Die Kommunikationseinrichtungen 15 und 25 bilden gemeinsam eine Kommunikationsverbindung 30 zum Übertragen von Daten zwischen dem spurgebundenen Fahrzeug 3 und der landseitigen Einrichtung 5, insbesondere ausgehend von dem spurgebundenen Fahrzeug 3 zur landseitigen Einrichtung 5.

Die optische Erfassungseinrichtung 10 ist eine Kameraeinheit 12 zum Erfassen einer in Fahrtrichtung 8 vorausliegenden Umgebung 45 des spurgebundenen Fahrzeugs 3.

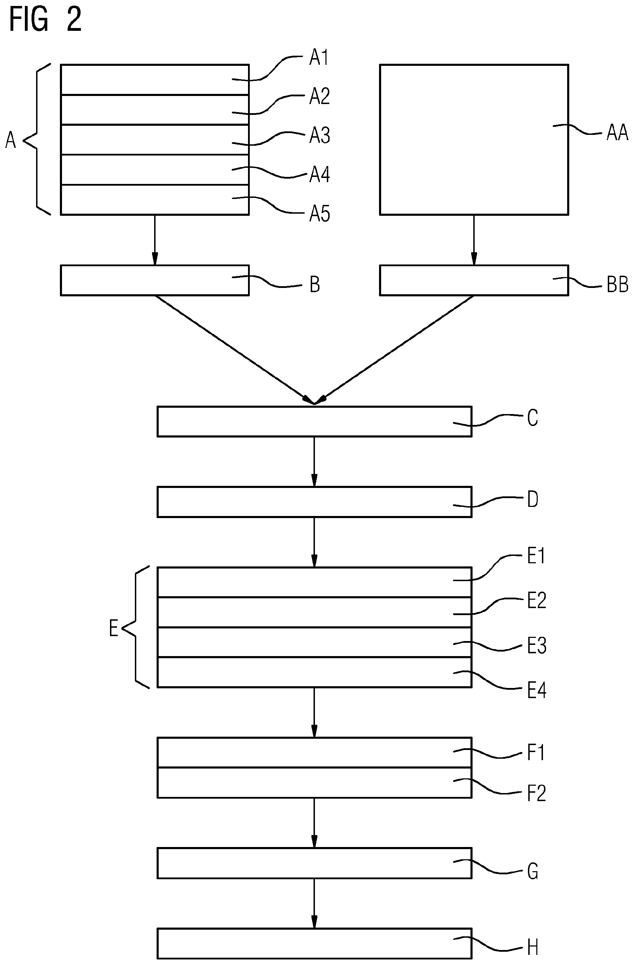

Figur 2 zeigt schematisch den Ablauf eines Ausführungsbeispiels des erfindungsgemäßen Verfahrens.

In einem Verfahrensschritt A wird eine Fahrtstrecke 41 von dem spurgebundenen Fahrzeug 3 befahren.

Während der Fahrt A wird der aktuelle Ort des spurgebundenen Fahrzeugs 3 kontinuierlich gemäß einem Verfahrensschritt A1 ermittelt. Dies erfolgt beispielsweise auf Basis von Ortungssignalen, die mittels eines GPS-Empfängers 49 des spurgebundenen Fahrzeugs 3 empfangen werden, und/oder auf Basis eines Zählsignals eines Achszählers des spurgebundenen Fahrzeugs 3. Anhand der Ortungssignale ermittelt die Ortsermittelungseinrichtung 40 eine Ortsinformation, welche den aktuellen Ort des spurgebundenen Fahrzeugs 3 repräsentiert.

Zudem wird während der Fahrt A eine Zeitinformation, welche die aktuelle Uhrzeit repräsentiert, kontinuierlich gemäß einem Verfahrensschritt A2 ermittelt.

Ferner wird während der Fahrt A ein Verbindungstyp, welcher die Art der datentechnischen Verbindung zwischen dem spurgebundenen Fahrzeug und der landseitigen Einrichtung repräsentiert, kontinuierlich gemäß einem Verfahrensschritt A3 ermittelt. Bei dem Verbindungstyp handelt es sich beispielsweise um eine 4G- oder 5G-Mobilfunkverbindung.

Außerdem wird während der Fahrt A eine Verbindungsqualität der Kommunikationsverbindung 30 kontinuierlich gemäß einem Verfahrensschritt A4 ermittelt. Die Verbindungsqualität umfasst beispielsweise das Signal-zu-Rausch-Verhältnis und/oder die Signalstärke des zwischen dem spurgebundenen Fahrzeug 3 und der landseitigen Einrichtung 5 übertragenen Signals.

Schließlich wird während der Fahrt A eine Bandbreite für das Hochladen und Runterladen von Daten zwischen dem spurgebundenen Fahrzeug 3 und der landseitigen Einrichtung 5 kontinuierlich gemäß einem Verfahrensschritt A5 ermittelt.

Die während der Fahrt A gewonnenen Informationen werden in einem Verfahrensschritt B an die landseitige Einrichtung 5 übertragen. Die Übertragung kann beispielsweise während der Fahrt oder nach der Fahrt erfolgen. Mit anderen Worten: Es werden bei den Fahrten A und/oder AA historische Verfügbarkeitsinformationen gewonnen. Die oben beschriebenen Informationen, wie Verbindungstyp, Verbindungsqualität und/oder Bandbreite, sind Teil dieser historischen Verfügbarkeitsinformationen. Auf der landseitigen Einrichtung 5 können die oben beschriebenen Informationen um weitere Informationen, wie beispielsweise Wetterdaten, die das Wetter während der Fahrt A und/oder AA repräsentieren, ergänzt werden.

Bei jeder Fahrt des spurgebundenen Fahrzeugs 3 können die Verfahrensschritte A und B durchgeführt werden. Auf diese Weise werden beispielsweise Informationen zur Verbindungsqualität aktualisiert und/oder weitere Datensätze für eine Mittelung der ermittelten Daten über mehrere Fahrten gesammelt.

Alternativ oder zusätzlich können die gewonnenen Informationen im Rahmen einer oder mehreren dafür vorgesehenen Messfahrten in Verfahrensschritten AA gewonnen und einem Verfahrensschritt BB an die landseitige Einrichtung 5 übertragen werden. Bei der Messfahrt wird beispielsweise ein Bandbreitenmessprogramm ausgeführt, bei dem Daten ausgehend von dem Messfahrzeug zu einer Bandbreitenmesseinrichtung der landseitigen Einrichtung 5 und in entgegengesetzter Richtung übertragen werden.

Die Messfahrten AA können wiederholt werden, um die Bandbreiteninformationen zu aktualisieren und/oder weitere Datensätze für eine Mittelung zusammen.

Die gewonnenen Informationen zur Verbindungsqualität werden in einem Verfahrensschritt C asynchron an die landseitige Einrichtung 5 übertragen und in eine Datenbank importiert und gespeichert. Die Datenbank ist beispielsweise auf der Servereinrichtung 19 hinterlegt.

Auf Basis dieser Grundlage wird eine Prognose während einer späteren Fahrt (gemäß einem Verfahrensschritt D) wie folgt durchgeführt:
Während der Fahrt D werden Daten zwischen dem spurgebundenen Fahrzeug 3 und der landseitigen Einrichtung in einem Verfahrensschritt E übertragen. Als Daten werden beispielsweise Videodaten übertragen, die mittels der Kameraeinheit 12 erzeugt werden. Dazu erfasst die Kameraeinheit 12 die Umgebung 45 außerhalb des spurgebundenen Fahrzeugs 3, nämlich die in Fahrtrichtung 8 vorausliegenden Umgebung 45, in einem Verfahrensschritt E1. Auf Basis dieser Erfassung E1 werden Videodaten in einem Verfahrensschritt E2 erzeugt. Die erzeugten Videodaten werden in einem Verfahrensschritt E3 an die landseitige Einrichtung 5 übertragen: Dazu werden die Videodaten über das Kommunikationsnetz 7, die Kommunikationsverbindung 30 und das landseitige Kommunikationsnetz 17 an eine Ausgabeeinrichtung 20 übertragen. Die Ausgabeeinrichtung 20 weist eine Anzeigeeinrichtung 22 auf, mittels derer die Videodaten einem Benutzer in einem Verfahrensschritt E4 angezeigt werden. Mit anderen Worten: Die Ausgabeeinrichtung 20 ist eine von einem Benutzer wahrnehmbare Ausgabeeinrichtung.

Während der Fahrt D wird der aktuelle Ort des spurgebundenen Fahrzeugs 3 kontinuierlich ermittelt. Dies erfolgt beispielsweise auf Basis von Ortungssignalen, die mittels des GPS-Empfängers 49 des spurgebundenen Fahrzeugs 3 empfangen werden, und/oder auf Basis eine Zählsignals eines Achszählers des spurgebundenen Fahrzeugs 3. Anhand der Ortungssignale wird dabei mittels der Ortsermittelungseinrichtung 9 eine Ortsinformation, welche den aktuellen Ort des spurgebundenen Fahrzeugs 3 repräsentiert, gemäß einem Verfahrensschritt F1 ermittelt.

Ergänzend wird während der Fahrt D eine Geschwindigkeitsinformation, welche eine aktuelle Geschwindigkeit des spurgebundenen Fahrzeugs 3 während der Fahrt repräsentiert, und eine Richtungsinformation, welche eine aktuelle Fahrtrichtung 8 des spurgebundenen Fahrzeugs 3 repräsentiert, gemäß einem Verfahrensschritt F2 ermittelt.

Anhand der geplanten Fahrtstrecke sowie anhand der Ortsinformation, Geschwindigkeitsinformation und Richtungsinformation ist bekannt, welche Fahrtabschnitte im Fahrtverlauf vorausliegen und zu welchem Zeitpunkt diese erreicht werden.

Für die vorausliegenden Fahrtabschnitte wird in einem Verfahrensschritt G eine Verfügbarkeitsinformation, welche eine Verfügbarkeit der Datenübertragung repräsentiert, mittels einer landseitigen Prognoseeinrichtung 37, die eine Recheneinrichtung 38 der Servereinrichtung 19 ist, prognostiziert.

Bei der Prognose G werden zudem Umgebungsinformationen, die während der Fahrt vorliegen und die Umgebung des spurgebundenen Fahrzeugs repräsentieren, prognostiziert. Beispielsweise werden Wetterdaten bei der Prognose G berücksichtigt, wenn das aktuelle Wetter Einfluss auf die Verbindungsqualität haben kann.

Die Umgebungsinformationen enthalten zudem Informationen in Bezug auf die Tageszeit, um tageszeitabhängige Ereignisse, wie etwa den sogenannten "Feierabendverkehr", bei der Prognose G zu berücksichtigen. Ferner enthalten die Umgebungsinformationen Informationen zu Veranstaltungen in der Umgebung des Fahrzeugs. Diese beiden Arten von Umgebungsinformationen haben Einfluss auf den Belegungsgrad (durch Fahrgäste) des spurgebundenen Fahrzeugs 3. w

Beispielsweise ist für einen vorausliegenden Fahrtabschnitt 46 aufgrund der in den Verfahrensschritten A und AA gewonnenen Informationen bekannt, dass eine Datenübertragung aufgrund einer Abschattung durch einen Tunnel 43 nicht möglich ist. Mit anderen Worten: die Verfügbarkeit der Datenübertragung liegt in diesem Fahrtabschnitt 46 (voraussichtlich) nicht vor und die entsprechende prognostizierte Verfügbarkeitsinformation ist demnach Null.

Auf Basis dieser Prognose G, insbesondere anhand der prognostizierten Verfügbarkeitsinformation, wird in einem Verfahrensschritt H mittels der Ausgabeeinrichtung 20 eine Hinweisinformation bereitgestellt. Dies erfolgt beispielsweise dadurch, dass die Anzeigeeinrichtung 22 eine Hinweismeldung, welche die Hinweisinformation darstellt, anzeigt. Die Hinweismeldung gibt beispielsweise an, wie die Verfügbarkeit zu einem Zeitpunkt t_{Z} in der Zukunft sein wird oder wie die Verfügbarkeit in x Sekunden sein wird (x ist konfigurierbar).

Der Benutzer nimmt die Hinweismeldung wahr und kann sich auf die erwartete fehlende Verfügbarkeit während der Fahrt durch den Fahrtabschnitt 46 gedanklich einstellen.

Ein weiteres Beispiel für einen vorausliegenden Fahrtabschnitt ist der Fahrtabschnitt 47, in dem Gebäude 48 entlang der Fahrtstrecke 41 vorhanden sind, die eine teilweise Abschattung der Datenübertragung bewirken. In den vergangenen Fahrten A und/oder AA wurde diese teilweise Abschattung bereits ermittelt. Die Hinweismeldung gibt in diesem Fall beispielsweise an, dass eine geringere Verfügbarkeit zu erwarten ist.

Insbesondere dann, wenn die prognostizierte Verfügbarkeitsinformation (wie in den beschriebenen Fällen "Tunnel 43" und "Gebäude 48") eine Beschränkung der Datenübertragung repräsentiert, ist die Hinweismeldung für den Benutzer besonders wichtig.

Die Hinweisinformation enthält zudem beispielsweise eine Hintergrundinformation, die einen Grund für die innerhalb des vorausliegenden Fahrtabschnitts prognostizierten Verfügbarkeit angibt. So wird dem Benutzer mit der Hinweismeldung nicht lediglich angezeigt, dass eine prognostizierte Verfügbarkeit zu erwarten ist, sondern auch der Grund für die prognostizierte Verfügbarkeit, beispielsweise der Tunnel 43.

Die Hintergrundinformation wird auf Basis einer digitalen Karte der Fahrtstrecke 41 ermittelt, welche Auskunft über entlang der Fahrtstrecke vorhandene Gebäude 48, Baumbestand, Gebirge, Haltestellen, Tunnel, etc. enthält. Zudem enthält die digitale Karte eine Netzabdeckungskarte, welche bei den vergangenen Fahrten gewonnene Informationen, wie Verbindungstyp, Verbindungsqualität und Bandbreite, enthält.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Übertragen von Daten zwischen einem spurgebundenen Fahrzeug (3) und einer landseitigen Einrichtung (5) während einer Fahrt (D) des spurgebundenen Fahrzeugs (3),
bei welchem:
- während der Fahrt (D) des spurgebundenen Fahrzeugs (3) Daten zwischen dem spurgebundenen Fahrzeug (3) und der landseitigen Einrichtung (5) übertragen werden (E),
- eine Ortsinformation, welche einen aktuellen Ort des spurgebundenen Fahrzeugs (3) während der Fahrt (D) repräsentiert, ermittelt wird (F1),
- eine Verfügbarkeitsinformation, welche eine Verfügbarkeit der Datenübertragung repräsentiert, für einen im Fahrtverlauf vorausliegenden Fahrtabschnitt (46) mittels einer landseitigen Prognoseeinrichtung (37) anhand der Ortsinformation prognostiziert wird (G), und
- vor dem Erreichen des Fahrtabschnitts (46, 47) eine Hinweisinformation, welche einen Hinweis zur Prognose angibt, anhand der prognostizierten Verfügbarkeitsinformation mittels einer Ausgabeeinrichtung (20) bereitgestellt wird (H).

2. Verfahren nach Anspruch 1,
bei welchem
- eine Geschwindigkeitsinformation, welche eine aktuelle Geschwindigkeit des spurgebundenen Fahrzeugs (3) während der Fahrt (D) repräsentiert, ermittelt wird (F2) und
- die Verfügbarkeitsinformation ferner anhand der Geschwindigkeitsinformation prognostiziert wird (G).

3. Verfahren nach Anspruch 1 oder 2,
bei welchem
die Verfügbarkeitsinformation anhand einer historischen Verfügbarkeitsinformation prognostiziert wird, wobei die historische Verfügbarkeitsinformation bei wenigstens einer vergangenen Fahrt (A, AA)
- des spurgebundenen Fahrzeugs (3) oder
- eines weiteren Fahrzeugs
ermittelt wird.

4. Verfahren nach Anspruch 3,
bei welchem
bei der wenigstens einen vergangenen Fahrt (A, AA)
- der aktuelle Ort des spurgebundenen Fahrzeugs (3) oder des weiteren Fahrzeugs,
- eine Zeitinformation, welche die aktuelle Zeit repräsentiert,
- ein Verbindungstyp, welcher die Art der datentechnischen Verbindung zwischen dem spurgebundenen Fahrzeug (3) und der landseitigen Einrichtung (5) repräsentiert,
- eine Verbindungsqualität zwischen dem spurgebundenen Fahrzeug (3) und der landseitigen Einrichtung (5) und/oder
- eine Bandbreite für das Hochladen und Runterladen von Daten zwischen dem spurgebundenen Fahrzeug (3) und der landseitigen Einrichtung (5)
ermittelt werden (A1, A2, A3, A4, A5).

5. Verfahren nach wenigstens einem der vorhergehenden Ansprüche,
bei welchem
die Verfügbarkeitsinformation ferner anhand von während der Fahrt (D) vorliegenden Umgebungsinformationen, welche die Umgebung des spurgebundenen Fahrzeugs (3) repräsentieren, prognostiziert wird (G).

6. Verfahren nach wenigstens einem der vorhergehenden Ansprüche,
bei welchem
die prognostizierte Verfügbarkeitsinformation eine Beschränkung der Datenübertragung repräsentiert.

7. Verfahren nach wenigstens einem der vorhergehenden Ansprüche,
bei welchem
- die Hinweisinformation eine Hintergrundinformation umfasst, welche einen Grund für die innerhalb des vorausliegenden Fahrtabschnitts (46, 47) prognostizierte Verfügbarkeit angibt, und
- die Hintergrundinformation auf Basis von
o einer digitalen Karte der Fahrtstrecke und/oder
oder Umgebungsinformationen nach Anspruch 4 ermittelt wird.

8. Verfahren nach wenigstens einem der vorhergehenden Ansprüche,
bei welchem
- eine Umgebung (45) innerhalb oder außerhalb des spurgebundenen Fahrzeugs (3) mittels einer optischen Erfassungseinrichtung (10) während der Fahrt (D) des spurgebundenen Fahrzeugs (3) erfasst wird (E1),
- Videodaten während der Fahrt (D) des spurgebundenen Fahrzeugs (3) auf Basis der Erfassung erzeugt werden (E2),
- das Übertragen (E) der Daten während der Fahrt (D) des spurgebundenen Fahrzeugs (3) ein Übertragen der Videodaten umfasst (E3) und
- die Videodaten während der Fahrt (D) des spurgebundenen Fahrzeugs (3) mittels der Ausgabeeinrichtung (20) ausgegeben werden (E4).

9. Verfahren nach Anspruch 8,
bei welchem
die Videodaten als Datenstrom in Echtzeit ausgehend von der Erfassungseinrichtung (10) bis zu der Ausgabeeinrichtung (20) übertragen werden.

10. Verfahren nach wenigstens einem der vorhergehenden Ansprüche,
bei welchem
die Ausgabeeinrichtung (20) eine landseitige, von einem Benutzer wahrnehmbare Ausgabeeinrichtung ist.

11. Computerprogramm, umfassend Befehle, die bei der Ausführung des Programms durch eine Recheneinrichtung (38) diese veranlassen, das Verfahren nach wenigstens einem der Ansprüche 1 bis 10 auszuführen.

12. Bereitstellungsvorrichtung für das Computerprogramm nach Anspruch 11 wobei die Bereitstellungsvorrichtung das Computerprogramm speichert und/oder bereitstellt.

13. System zum Übertragen von Daten zwischen einem spurgebundenen Fahrzeug (3) und einer landseitigen Einrichtung (5) während einer Fahrt (D) des spurgebundenen Fahrzeugs (3),
umfassend:
- eine Kommunikationsverbindung (30), welche eingerichtet ist, während der Fahrt (D) des spurgebundenen Fahrzeugs (3) Daten zwischen dem spurgebundenen Fahrzeug (3) und der landseitigen Einrichtung (5) zu übertragen (E),
- eine Ortsermittelungseinrichtung (49), welche eingerichtet ist, eine Ortsinformation, welche einen aktuellen Ort des spurgebundenen Fahrzeugs (3) während der Fahrt (D) repräsentiert, zu ermitteln (F1),
- eine landseitige Prognoseeinrichtung (37), welche eingerichtet ist, eine Verfügbarkeitsinformation, welche eine Verfügbarkeit der Datenübertragung repräsentiert, für einen im Fahrtverlauf vorausliegenden Fahrtabschnitt (46, 47) anhand der Ortsinformation zu prognostizieren (G), und
- eine Ausgabeeinrichtung (20), welche eingerichtet ist, vor dem Erreichen des Fahrtabschnitts (46, 47) eine Hinweisinformation, welche einen Hinweis zur Prognose angibt, anhand der prognostizierten Verfügbarkeitsinformation bereitzustellen (H).
